# EUROPÄISCHE PATENTANMELDUNG

(11) **EP 0 864 550 A1**
(43) Veröffentlichungstag der Anmeldung: **16.09.1998**
(21) Anmeldenummer: 98104442.3
(22) Anmeldetag: 12.03.1998
(51) Int. Cl.: C04B 38/06, C04B 41/00

(54) **Verfahren zur Herstellung von beschichteten Keramiken mit erhöhter Mikroporosität, beschichtete Keramiken mit erhöhter Mikroporosität sowie daraus hergestellter Gegenstand**

(30) Priorität: 13.03.1997 DE 19710264
(71) Anmelder: Drache, Frank, 65582 Diez (DE); Bucher, Heinz, 65582 Diez (DE)
(72) Erfinder: Drache, Frank, 65582 Diez (DE); Bucher, Heinz, 65582 Diez (DE)
(74) Vertreter: Blumbach, Kramer & Partner GbR

(57) **Zusammenfassung**

Die Erfindung betrifft ein Verfahren zur Herstellung von Keramiken, insbesondere von beschichteten Keramiken mit erhöhter Mikroporosität, sowie Keramiken und insbesondere beschichtete Keramiken mit erhöhter Mikroporosität sowie daraus hergestellte Gegenstände. Damit hierbei die innere Oberfläche vergrößert und das Filterverhalten, insbesondere die Filterwirkung noch gesteigert wird, ist vorgesehen, daß dem Schlicker der Keramik wenigstens eine ausbrennbare Substanz zugegeben wird.

## Beschreibung

Die Erfindung betrifft ein Verfahren zur Herstellung von Keramiken, insbesondere von beschichteten Keramiken mit erhöhter innerer Oberfläche und/oder Mikroporosität, sowie Keramiken und insbesondere beschichtete Keramiken mit erhöhter innerer Oberfläche und/oder Mikroporosität sowie daraus hergestellte Gegenstände.

Keramiken werden heutzutage aufgrund von deren hoher mechanischer sowie thermischer Beständigkeit in zunehmendem Maße eingesetzt. Eine besonders interessante Form der Keramik stellt die Schaumkeramik mit deren Einsatz als Filter dar. Schaumkeramikfilter aus Al₂O₃, SiC, ZrO₂-Spinell, Zirkonsilicat usw. sind auf dem Gebiet wohlbekannt und werden seit geraumer Zeit mit großem Erfolg beispielsweise für die Flüssigmetallfiltration von Metallschmelzen bzw. von Schmelzlegierungen zum mechanischen Entfernen von Carbiden, Oxiden sowie anderen Schmutzteilchen bei Temperaturen von 580°C bis 1800°C eingesetzt. Sie besitzen dort ferner mit den bekannten gesteuert einstellbaren Porositäten von 10 PPI bis zu 90 PPI (PPI: Poren pro Inch) die Aufgabe, turbulente Metallschmelzströme in laminare Ströme umzuwandeln, um die Dichte des nachfolgend zu gießenden Metallteils zu erhöhen und um Lufteinschlüsse, d.h. Lunker zu vermeiden.

Auch im Bereich der Normal- bis Heißgasfiltration werden in Temperaturbereichen von -50°C bis +1500°C Schaumkeramikfilter zur Abscheidung von Schadstoffen aus dem Luftstrom sowie zur Laminarstromerzeugung in zunehmendem Maße eingesetzt. Derartige Schaumkeramikfilter sind in der Regel mechanisch und thermisch gut regenerierbar und gegenüber aggressiven Bedingungen in sauren und alkalischen Umgebungen chemisch äußerst resistent.

Derartige Schaumkeramiken weisen bereits eine sehr große innere Oberfläche auf, die im wesentlichen durch die Porosität des Schaums und die verwendeten keramischen Grundstoffe bestimmt wird.

Es werden derzeit Werte von typischerweise ca. 40 m²/g oder m²/l erreicht. Vielfach ist es jedoch wünschenswert, diese innere Oberfläche zur Erhöhung der Filterwirkung noch zu steigern beziehungsweise durch geeignete weitere Maßnahme die Filterwirkung bzw. Adsorptions- oder Absorptionsfähigkeit zu verbessern.

Aufgabe der Erfindung ist es somit, eine Keramik bereitzustellen, die gegenüber den bekannten Keramiken eine vergrößerte innere Oberfläche aufweist, sowie ein Verfahren zu deren Herstellung. Ferner soll mit der Erfingung das Filterverhalten, insbesondere die Filterwirkung noch gesteigert werden.

Dies wird überraschend einfach durch die in den Ansprüchen 1 und 17 definierte Erfindung gelöst.

Danach wird eine Schaumkeramik bereitgestellt, die einen durch Brennen verfestigten Keramikkörper für die katalytische Umwandlung und/oder zur Adsorption von Fluiden und in Fluiden geführten Stoffen und Partikeln umfaßt, wobei die innere Oberfläche gegenüber herkömmlichen Keramiken, insbesondere Schaumkeramiken, merklich vergrößert ist.

Durch das Zusetzen von im wesentlichen ausbrennbaren Substanzen zum Schlicker erhöht sich während des Ausbrennens dieser Substanzen die innere Oberfläche im Vergleich zu herkömmlichen Keramiken erheblich. Dieser Vorgang ist zum einen durch die Quantität und die Art der Zusätze zum Binder und zum anderen durch Variation der Ausbrenntemperaturen steuerbar, so daß der Schaumkeramik unterschiedlich große mikroporöse Oberflächen vermittelt werden können. Damit lassen sich für die Problemstellung beziehungsweise für die jeweilige Anwendung optimierte Schaumkeramiken herstellen.

Durch die erhöhte innere Oberfläche bzw. erhöhte Mikroporosität und die dadurch hervorgerufene Kapillarwirkung ergibt sich ein hydrophiler Charakter der Keramik, die beispielsweise hervorragend für Be- und Entfeuchtungsaufgaben einsetzbar ist. Erfindungsgemäße Keramiken haben leicht das Drei- bis Vierfache von deren Eigengewicht an Wasser bzw. Flüssigkeiten aufgenommen und gespeichert.

Bei definierbarer und einstellbarer Druckdifferenz in Abhängigkeit zur gesteuerten Porosität und Materialstärke der Keramik stellt die erfindungsgemäße Keramik darüberhinaus einen hervorragenden Flammschutz dar und zeigt durch ihre definiert einstellbare extrem große Offenporigkeit sehr gute Schall- und Wärmedämmeigenschaften. Bedingt durch die kristalline, große, mikroporöse Oberfläche des gebrannten Schaumkeramikkörpers sind für Adsorptionsvorgänge ideale Voraussetzungen geschaffen.

Die feinporöse Keramik kann leicht thermisch gereinigt, neutralisiert oder auch nachbeschichtet werden.

Vorteilhafterweise umfaßt der Binder des Schlickers ein Silicatsystem. Dieser nach der Trocknung im Gegensatz zu den herkömmlichen Phosphatbindersystemen chemisch neutrale Binder ermöglicht die Zusetzung von feinverteilbaren und ausbrennbaren Materialien, wie beispielsweise von organischen Substanzen wie pulverisierten Kunststoffen. Prinzipiell lassen sich für die Zwecke der Erfindung fast alle ausbrennbaren, nicht wasserlöslichen Stoffe verwenden. Das Ausbrennen der Materialien ist im wesentlichen für die Vergrößerung der inneren Oberfläche der Schaumkeramik im Vergleich zu üblichen Schaumkeramiken verantwortlich. Als organisches Material lassen sich billige und leicht verfügbare Substanzen, wie Mehl, oder Sägemehl, aber auch kleine Kunststoffpartikel verwenden. Unter Mehl ist in diesem Fall jedes organische, verbrennbare Mehl wie Roggen-Weizen-, Stärke-, Holz- oder Reismehl usw. zu verstehen.

Durch die Auswahl mikroporöser Aluminiumdioxide oder Titandioxide, bzw. Mischungen aus diesen, als feinteiliges keramischen Material zur Bildung des Schlickers lassen sich mikroporöse Schaumkeramiken erreichen, die eine innere Oberfläche von weit über 40 m²/g bzw. m²/l und sogar über 100 m²/g bzw. m²/l aufweisen im Gegensatz zu herkömmlichen Aluminiumdioxid- bzw. Titandioxid-Schaumkeramiken, die eine innere Oberfläche von etwa 40 bis im besten Falle 50 m²/g bzw. m²/l besitzen.

Je nach Vorgabe kann die Keramik durch Auswahl eines entsprechenden Schaums, vorzugsweise eines retikulierten Polyiirethanschaumes, eine Grundporosität zwischen 8 und 100 PPI aufweisen. Zusammen mit der schon erwähnten Einstellung der Mikroporosität durch ausbrennbare Zusätze zum Schlicker und die Variation der Brenntemperatur läßt sich je nach Aufgabe eine speziell optimierte und angepaßte Schaumkeramik herstellen.

Auf der vergrößerten Oberfläche lassen sich zusätzlich katalytisch wirksame bzw. die Adsorption unterstützende Komponenten auf- bzw. in die Keramik einbringen, wobei die vorher gebrannte Schaumkeramik als Trägermaterial dient. Das Auf- bzw. Einbringen läßt sich auf vielfältige Weise, beispielsweise durch Tränken, Tauchen Spritzen oder Rakeln durchführen. Die Beschichtung erhält mittels eines nach dem Aushärten chemisch neutralen Bindersystems auf Silikatbasis die notwendige Haftfähigkeit und Festigkeit.

Aktiv wirksame Komponenten für katalytische bzw. Adsorptionsvorgänge sind beispielsweise Metalloxide, Pottasche, Kupfermanganat und Kaliumpermanganat, die teilweise zur Neutralisation von gasförmigen Schadstoffen, wie beispielsweise SO₂, NOₓ, CO₂, HOX usw. dienen, wobei die in der Regel notwendige Verweilzeit der Abluft im Filter von mindestens einer Sekunde dadurch erfüllt werden kann, daß die maximale Luftanströmgeschwindigkeit 0,1 m/s pro m² Filteranströmfläche beträgt und die Dicke der Schaumkeramik 50 mm nicht unterschreitet, um Adsorptionseffekte beziehungsweise katalytisch unterstützte Umwandlungseffekte sicherzustellen.

Die Einsatzmöglichkeiten der Erfindung, vor allem auf dem Gebiet der Minimierung des Schadstoffausstoßes, sind für einen Fachmann durch die vielfältigen Möglichkeiten in Bezug auf die Anpassung der Keramik an den jeweiligen Schadstoff, dessen Mengen und Aggregatszustand fast beliebig erweiterbar.

Die hydrophile Eigenschaft der erfindungsgemäßen Schaumkeramik kann durch Ein- bzw. Aufbringen von Cellulose weiter erhöht werden. Eine derartig präparierte Schaumkeramik besitzt ein Wasseraufnahmevermögen, welches mehr als dem Drei- bis Vierfachen ihres Eigengewichts entspricht.

In weiterer Ausgestaltung der Erfindung werden die genannten Vorteile der Schaumkeramik mit vergrößerter innerer Oberfläche mit den hervorragenden katalytischen Eigenschaften von Zeolithen kombiniert. Die hohe Formselektivität der Zeolithe bestimmt beispielsweise die gute Eignung dieser Materialien für Crackreaktionen. Im Gegensatz zu reinen Zeolithen, welche mit Bindemitteln zu Formkörpern gestaltet werden, die nur eine eingeschränkte Stabilität aufweisen, ermöglicht die Kombination mit der Schaumkeramik eine fast beliebige Gestaltung des Katalysators.

Die Schaumkeramik kann mit den verschiedensten Zeolithen, beispielsweise Mordenit, Zeolith X, ZSM 5 etc. mit Porengrößen von 5 bis 11 Å beschichtet und/oder durchsetzt werden. Zur Erhöhung der katalytischen Aktivität werden die Zeolithe calciniert und durch einen Ionenaustausch in die sogenannte H-Form überführt, bei der ein Proton für den Ladungsausgleich im Kristall verantwortlich zeichnet.

In Abhängigkeit von der chemischen Reaktion, die katalytisch unterstützt werden soll, kann eine Dotierung der Zeolithe mit Metallionen, beispielsweise Co²⁺, Mn²⁺ oder Zn²⁺, durchgeführt werden. In vielen Fällen läßt sich auf derartige Weise der Katalysator für das jeweilige Problem optimieren. Vorteilhafterweise sind Zeolithe ungiftig und weisen eine leichte Abbaubarkeit auf, da sie fast vollständig aus Siliciumdioxid bestehen. Die hohe Temperaturbeständigkeit bis auf etwa 700°C ermöglicht den Einsatz derartiger erfindungsgemäßer Katalysatoren auch bei hohen Temperaturen.

Die Verwendungsmöglichkeiten der erfindungsgemäßen Ausführungsformen sind überaus vielfältig, beispielsweise auch als Crackkatalysatoren und Molekularsiebe.

Darüber hinaus lassen sich Schüttgutkatalysatoren und -filter ersetzen, wobei letztere nach der Benutzung häufig als Sondermüll entsorgt werden müssen, während entsprechende Filter und Katalysatoren gemäß der Erfindung beispielsweise durch thermisches Reinigen und erneutes Beschichten wiederaufgearbeitet werden können.

Weiterhin sind speziell konstruierte Schaumkeramiken herstellbar, deren Grundporosität beziehungsweise deren Beschichtungart mit der Dicke variiert, so daß beispielsweise unterschiedliche und örtlich voneinander getrennte Reaktionen oder Adsorptionen ablaufen können. Auf diese Weise können z.B. Schadstoffe eliminiert werden, die für in der Keramik nachfolgende Katalysatorbeschichtungen giftig sind. Ännlich lassen sich komplizierte, hintereinander ablaufende Reaktionen gezielt steuern.

Die Erfindung wird im folgenden durch Bezugnahme auf bevorzugte Ausführungsformen beschrieben, wobei im weiteren beispielhaft, aber nicht darauf beschränkt, erfindungsgemäße Schaumkeramiken betrachtet werden.

Ausgangspunkt eines erfindungsgemäßen Schaumkeramikkörpers ist die Bereitstellung eines geeignet gestalteten Kunststoffschaums. Dazu werden Matten aus offenporigem Schaumstoff, beispielsweise Polyurethanschaumstoff, mit der jeweils gewünschten Porenzahl und -dicke durch Verschweißen oder Verkleben laminiert.

Der Schaumstoff kann eine Porosität zwischen vorzugsweise 8 bis 100 PPI aufweisen. Die einzelnen Komponenten des Schlickers werden auf an sich bekannte Weise in abgewogenen Mengen zusammengegeben und zu einer homogenen Masse verrührt. Die Herstellung des Schlickers ist einem Fachmann wohlbekannt, weshalb im Folgenden darauf nicht näher eingegangen wird.

Im Gegensatz zu den herkömmlichen Phosphatbindesystemen wird erfindungsgemäß vorzugsweise ein Binder verwendet, der auf einer Silicatbasis beruht. Je nach Wahl der herzustellenden Keramik werden für den Schlicker die entsprechenden feinteiligen keramischen Materialien ausgewählt, beispielsweise Aluminiumoxide, Titanoxide oder eine Mischung daraus.

Erfindungsgemäß wird dem Schlicker wenigstens eine ausbrennbare Substanz zugesetzt. In verschiedenen Ausführungsformen der Erfindung wird die ausbrennbare Substanz aus einer Vielzahl der nicht wasserlöslichen brennbaren Materialien ausgewählt, beispielsweise wird eine organische Substanz, wie ein Mehl oder ein Sägemehl, oder auch ein fein gemahlener Kunststoff zum Schlicker gegeben.

Der retikulierte, d.h. offenporige Schaumstoff wird dann in der Keramikaufschlämmung getränkt, ausgedrückt, getrocknet und je nach Bedarf bei einer Temperatur zwischen 580 und 1300°C gebrannt. Dabei verbrennt das Kunststoffmaterial und im wesentlichen die zum Schlicker zugesetzte, ausbrennbare Substanz, und es verbleibt ein offenzelliger Keramikkörper mit der Struktur des ursprünglichen Schaumstoffs zurück, wobei die innere Oberfläche im Vergleich zu herkömmlichen Schaumkeramiken deutlich erhöht ist.

In einem weiteren Arbeitsschritt lassen sich nun katalytisch wirkende bzw. die Adsorption unterstützende Substanzen auf bzw. in die Schaumkeramik einbringen, was im Folgenden vereinfacht als Beschichtung bezeichnet wird.

Zu diesem Zweck erfolgt je nach Substanz die Herstellung einer Aufschlämmung und/oder einer Lösung der Substanz mit einem Binder auf Silicatbasis. Je nach Ausführungsform der Erfindung umfaßt diese Substanz Metalloxide, Pottasche, Kupfermanganat und/oder Kaliumpermanganat.

Bei einer weiteren hydrophilen Ausführungsform der Erfindung umfaßt die Beschichtung Cellulose.

Im Folgenden wird insbesondere auf die Beschichtung mit Zeolithen eingegangen. Die Aufschlämmung mit einem Zeolithen, beispielsweise mit Glasmehl und Wasser, wird auf die Schaumkeramik mit erhöhter Porosität aufgebracht. Hierzu stehen verschiedene Verfahren zur Verfügung. Diese Verfahren umfassen das Tränken, Tauchen, Spritzen oder Rakeln etc...

Bei einer erfindungsgemäßen Ausführungsform wurde die Schaumkeramik in die beschriebene Aufschlämmung getaucht und anschließend bei Temperaturen zwischen 100 und 200°C über mehrere Stunden getrocknet. Der Zeolith wird danach durch Erhitzen der Schaumkeramik auf 400 bis 600°C fixiert.

Zur Steigerung der Aktivität des Zeolithen kann dieser calciniert werden und es kann ein Einbringen von Protonen durch Ionentausch noch vor der Aufschlämmung vorgenommen werden. Zur Steigerung der Wirkung kann eine Aktivierung auch nach dem Fixieren des Zeolithen an der Schaumkeramik erfolgen. Beste Ergebnisse werden erreicht, wenn der Zeolith sowohl vor der Aufschlämmung als auch nach dem Fixieren aktiviert wird Das Aktivieren umfaßt das Calcinieren und das Einbringen von Protonen durch Ionentausch in die Zellen. Dieses Verfahren ist dem Fachmann wohlbekannt und wird hier nicht weiter erläutert.

Bei einer weiteren erfindungsgemäßen Ausführungsform ist der Zeolith im Hinblick auf die katalytische Umwandlung von Schadstoffen in der Abluft aktiviert. Diese Aktivierung umfaßt eine Dotierung mit Metallionen, die beispielsweise Co²⁺, Mn²⁺ und Zn²⁺ oder deren Kombinationen umfassen können.

In besonders vorteilhafter Weise lassen sich mit der erfindungsgemäßen Schaumkeramik selbsttragende Filter herstellen, die bis in den Hochtemperaturbereich, d.h. bis über 1500° Celsius sowohl mechanisch als auch chemisch und thermisch stabil bleiben.

## Patentansprüche

1. Keramik, insbesondere retikulierte Schaumkeramik, umfassend
einen durch Temperaturbehandlung verfestigten Keramikkörper, vorzugsweise für die katalytische Umwandlung und/oder zur Adsorption von Fluiden und in Fluiden geführten Stoffen und Partikeln,
bei welchem die innere Oberfläche und/oder
Mikroporosität aufgrund der Zusetzung wenigstens einer ausbrennbaren Substanz zum Schlicker nach der Temperaturbehandlung gegenüber der gleichen Keramik, die ohne den Zusatz von ausbrennbaren Substanzen hergestellt wurde, erhöht ist.

2. Keramik nach Anspruch 1, dadurch gekennzeichnet, daß der Keramikbinder ein Silikat umfaßt.

3. Keramik nach Anspruch 1 oder 2, dadurch gekennzeichnet, daß der Keramikbinder organische Substanzen als ausbrennbaren Zusatz umfaßt.

4. Keramik nach Anspruch 3, dadurch gekennzeichnet, daß der Keramikbinder Mehl und/oder Sägemehl umfaßt.

5. Keramik nach einem der vorstehenden Ansprüche, dadurch gekennzeichnet, daß die Keramik im wesentlichen Aluminiumoxide, Titanoxide oder eine Mischung daraus umfaßt.

6. Keramik nach einem der vorstehenden Ansprüche, dadurch gekennzeichnet, daß die Keramik eine Schaumkeramik ist und eine Grundporosität zwischen 8 und 100 PPI (Poren pro Inch) aufweist.

7. Keramik, insbesondere Schaumkeramik nach einem der vorstehenden Ansprüche, dadurch gekennzeichnet, daß die Keramik mit einer katalytisch wirkenden Substanz beschichtet und/oder durchsetzt ist.

8. Keramik, insbesondere Schaumkeramik nach einem der Ansprüche von 1 bis 7, dadurch gekennzeichnet, daß die Keramik mit einer die Adsorption unterstützenden Substanz beschichtet und/oder durchsetzt ist.

9. Keramik nach Anspruch 7 oder 8, dadurch gekennzeichnet, daß die Substanz Metalloxide, Pottasche, Kupfermanganat und/oder Kaliumpermanganat umfaßt.

10. Keramik nach Anspruch 7 oder 8, dadurch gekennzeichnet, daß die Beschichtung und/oder Einlagerung Cellulose umfaßt.

11. Keramik nach Anspruch 7 oder 8, dadurch gekennzeichnet, daß die Beschichtung und/oder Einlagerung Zeolith umfaßt.

12. Keramik nach Anspruch 7, 8, 9 oder 11, dadurch gekennzeichnet, daß der Zeolith calciniert ist und durch Ionenaustausch Protonen in den Zeolith eingebracht sind.

13. Keramik nach Anspruch 11 oder 12, dadurch gekennzeichnet, daß der Zeolith zur Erhöhung der katalytischen Aktivität durch Ionenaustausch mit Metallionen dotiert ist.

14. Keramik nach Anspruch 13, dadurch gekennzeichnet, daß die Metallionen Cu²⁺ ,Mn²⁺ und/oder Zn²⁺ umfassen.

15. Filter, vorzugsweise für die katalytische Umwandlung und/oder zur Adsorption von Fluiden und in Fluiden geführten Stoffen und Partikeln, gekennzeichnet durch eine Keramik nach einem der Ansprüche von 1 bis 14.

16. Filter nach Anspruch 15, gekennzeichnet durch die An- oder Einlagerung von Metallionen für die Behandlung von schadstoffangereicherter Abluft, welche SO₂, CO₂, NOX und/oder HOX umfaßt.

17. Verfahren zur Herstellung einer Schaumkeramik mit erhöhter innerer Oberfläche und/oder Mikroporosität, umfassend die Schritte:
- des Bereitstellens eines Kunststoffschaums;
- des Bereitstellens eines Schlickers mit einem Binder, der vorzugsweise auf Silikatbasis hergestellt ist, in Form einer Aufschlämmung von feinteiligem keramischen Material, wobei der Schlicker ausbrennbare Materialien umfaßt;
- Aufbringen und/oder Einbringen des Schlickers in den Schaumstoff;
- Verfestigen des auf- beziehungsweise in den Schaumstoff eingebrachten Schlickers durch Temperaturbehandlung bei einer Temperatur zwischen 580°C und 1300 °C;

18. Verfahren nach Anspruch 17, dadurch gekennzeichnet, daß die ausbrennbaren Materialien Mehl und/oder Sägemehl umfassen.

19. Verfahren nach Anspruch 17 oder 18, dadurch gekennzeichnet, daß das feinteilige keramische Material Aluminiumdioxide und/oder Titandioxide umfaßt.

20. Verfahren, insbesondere Verfahren nach einem der vorstehenden Ansprüche 17, 18 oder 19,
ferner die Schritte umfassend:
des Bereitstellens einer Aufschlämmung und/oder einer Lösung mit einer die Adsorption unterstützenden Substanz mit einem Binder auf Silikatbasis;
des Aufbringens und/oder Einbringens der Aufschlämmung und/oder der Lösung auf und/oder in die Schaumkeramik mit erhöhter Porosität;
des Fixierens der die Adsorption unterstützenden Substanz an der Schaumkeramik durch Trocknen und/oder Brennen.

21. Verfahren nach einem der vorstehenden Verfahrensansprüchen 17, 18 oder 19, ferner die Schritte umfassend:
des Bereitstellens einer Aufschlämmung und/oder einer Lösung einer katalytisch wirkenden Substanz mit einem Binder auf Silikatbasis;
- Auf- beziehungsweise Einbringen der Aufschlämmung und/oder der Lösung in die Schaumkeramik mit erhöhter Porosität;
- Fixieren der die Adsorption unterstützenden Substanz an der Schaumkeramik durch Trocknen und/oder Brennen.

22. Verfahren nach einem der vorstehenden Verfahrensschritte 20 oder 21, dadurch gekennzeichnet, daß die Substanz Zeolith oder Zeolithe enthaltendes Material umfaßt.
